Europäisches Patentamt

European Patent Office

Office européen des brevets

(11) Veröffentlichungsnummer: **0 263 940**
**A2**

(12) **EUROPÄISCHE PATENTANMELDUNG**

(21) Anmeldenummer: **87111861.8**

(22) Anmeldetag: **17.08.87**

(51) Int. Cl.⁴: **F16L 11/08**

(30) Priorität: **22.08.86 DE 3628598**

(43) Veröffentlichungstag der Anmeldung:
**20.04.88 Patentblatt 88/16**

(84) Benannte Vertragsstaaten:
**AT BE CH DE FR GB IT LI NL**

(71) Anmelder: **Albishausen, Hartmut**
**An den 30 Morgen 26**
**D-6382 Friedrichsdorf(DE)**

(72) Erfinder: **Albishausen, Hartmut**
**An den 30 Morgen 26**
**D-6382 Friedrichsdorf(DE)**

(74) Vertreter: **Lotterhos, Hans Walter, Dr.-Ing.**
**Lichtensteinstrasse 3**
**D-6000 Frankfurt am Main 1(DE)**

(54) **Schlauchseele aus einem Geflecht aus Metalldraht und/oder nichtmetallischen Strängen, damit hergestellter Gummi- und/oder Kunststoffschlauch und Verfahren zur Herstellung von Schlauchseele und Schlauch.**

㊗ Die Erfindung zielt besonders auf Saugschläuche für die Außen-und Innenreinigung von Gebäuden und Großfahrzeugen des Personenverkehrs ab, die in der Praxis bei Unterdrucken bis zu 0,1 bar Innendruck betrieben werden, wobei die bekannten Saugschläuche wenigstens einen der Nachteile aufweisen, im Saugbetrieb zu schrumpfen, Einschnürungen des Saugkanals zu erhalten, zu wenig flexibel und zu schwer zu sein. Dabei dient als Festigkeitsträger eine in die Schlauchwand eingearbeitete gewendelte Drahteinlage.

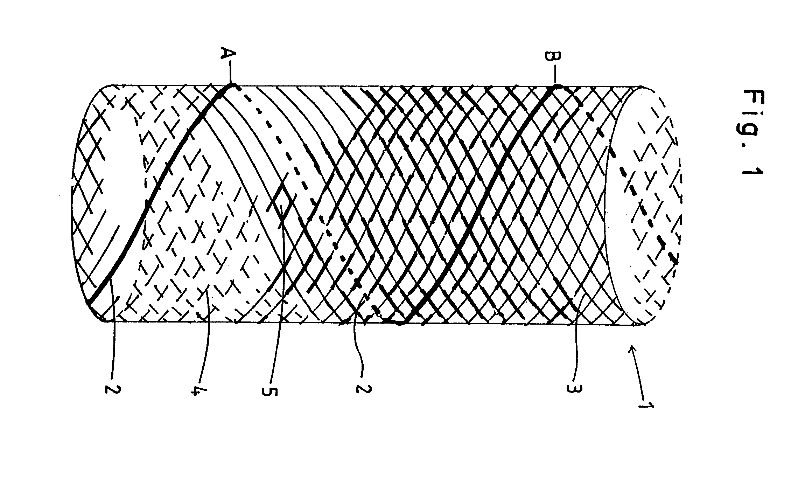

Unter Vermeidung der oben genannten Nachteile zeichnen sich die Schläuche gemäß der Erfindung durch ein vorgefertigtes, elastisch flexibles, nach radialer und/oder longitudinaler Verformung elastisch sich rückformendes, stabilses Geflechtrohr (1), insbesondere aus härtbarem Federstahl-oder Titanlegierungsdraht als Schlauchseele (Festigkeitsträger) aus; vgl. Fig. 1.

Ein die Anforderungen erfüllender, auch als Druckschlauch einsetzbarer, Saugschlauch ist beispielsweise aus einer aus 2 × 18 Federstahldrähten (2, 3, 4) von 0,9 mm Stärke geflochtenen Schlauchseele (1) von 55 mm Durchmesser zu einer Gesamtwandstärke von 3 mm gefertigt, hat ein Gewicht von etwa 800 g/m und ist dabei extrem flexibel und mechanisch sehr widerstandsfähig.

Nach einem speziellen Verfahren sind Integralschaumschläuche mit Schlauchseele (1) herstellbar.

**Fig. 1**

## Schlauchseele aus einem Geflecht aus Metalldraht und/oder nichtmetallischen Strängen, damit hergestellter Gummi-und/oder Kunststoffschlauch und Verfahren zur Herstellung von Schlauchseele und Schlauch.

Die Erfindung bezieht sich auf einen Gummi- und/oder Kunststoffschlauch mit einem Festigkeitsträger in Gestalt eines zu einer Zylinderform geflochtenen Maschenwerkes aus Metalldraht und/oder nichtmetallischen Strängen und betrifft im besonderen den Festigkeitsträger selbst als gemäß der Erfindung vorgefertigte Schlauchseele; ferner betrifft die Erfindung Verfahren zur Herstellung der Schlauchseele und Verfahren zur Herstellung von Schläuchen unter Verwendung der Schlauchseele.

Die Schläuche gemäß der Erfindung eignen sich als Vakuum-und als Druckschläuche und sind besonders für die pneumatische (saugende oder drückende) Förderung von Feststoffpartikeln und/oder Flüssigkeiten vorgesehen. Vom Ausgangspunkt der Erfindung her - nämlich anläßlich in der Reinigungspraxis aufgetretener Benutzungsprobleme beim Einsatz von Saugschläuchen für die trockene und/oder nasse Außen-und Innenreinigung von Gebäuden, Räumen und Großfahrzeugen des Personen-und Güterverkehrs sowie deren Inneneinrichtungen, wie Bodenbelägen, Polstersitzen, Wand und Deckenverkleidungen oder -bespannungen usw. - betrifft die Erfindung insbesondere solche Saugschläuche für den Reinigungsbetrieb, die in der Praxis bis herab zu etwa 10 kPa (1 m Wassersäule; 0,1 atm) absolutem Druck in dem Saugschlauch betrieben werden.

Nach dem Stand der Technik sind mehrere Konstruktionskonzepte für im Unterdruckbetrieb verwendbare Schläuche bekannt, die einerseits mechanisch widerstandsfähig sein und andererseits eine für ihre Handhabung hinlägliche Flexibilität aufweisen sollen. So weist nach einem Konzept der Schlauch eine im wesentlichen gleichmäßige Wandstärke auf, wobei zur Verfestigung der Schlauchwand entweder eine Drahtspirale eingearbeitet oder eine innere Lage der Schlauchwand während der Schlauchherstellung mit metallischem oder nichtmetallischem Material umflochten worden ist.

Derartige in die Schlauchwand eingeordnete rohrförmige Geflechte werden nachfolgend allgemein als Schlauchseele bezeichnet.

Nach einem anderen Konzept ist die Schlauchwand außen spiralförmig oder spiralig, das meint hier und im folgenden schraubenlinienartig oder gewendelt, gerippt, wobei die Rippen und deren Zwischenstreifen aus einem oder aus mehreren profiliert extrudierten und dann spiralig gewickelten Kunststoffstreifen, die randseits miteinander verbunden worden sind, entstanden ist. Mit diesem Bautyp befassen sich die DE-OS 27 17 212 und die darin zitierten US-Patentschriften 3 199 541, 3 255 780, 3 890 181 und 3 910 808. Auch dort kennt man die Verfestigung mit einer Drahtspirale, die gemäß der US-PS 3 890 181 gleichzeitig mit der Extrudierung der Kunststoffstreifen in diese eingearbeitet wird.

Eine besondere Verbindungstechnik der zur Spirale gewickelten Kunststoffstreifen zum Schlauch besteht nach der DE-OS 27 17 212 und den US-Patentschriften 3 199 541 und 3 255 780 darin, die aneinandergrenzenden Längsränder des oder der spiralig gewickelten Kunststoffstreifen unter Ausbildung eines spiralartigen Wulstes mehr oder weniger gelenkig ineinandergreifen zu lassen.

Entsprechende Schlauchkonstruktionen aus Metall sind ebenfalls bekannt. Ferner kennt man Schläuche mit ringförmiger Rippurig außen und/oder innen.

Ihre Flexibilität erhalten die gerippten Schläuche entweder durch die Flexibilität der zwischen den Rippen gelegenen dünneren Materialstreifen und/oder durch ein gewisses Spiel des durch das Ineinandergreifen der Streifenlängsränder ausgebildeten spiralartigen Wulstes, der regelmäßig noch mit einer elastischen Dichtmasse ganz oder teilweise ausgefüllt ist.

An Schläuchen mit einer Schlauchseele aus Metalldrahtgeflecht seien ein unelastisch verformbarer Belüftungsschlauch und ein hochbelastbarer Hydraulikschlauch erläutert.

Dieser Belüftungsschlauch wird insbesondere in Kraftfahrzeugen zur Fahrgastraumbelüftung und -heizung verwendet und ist aus einem vorgefertigten Drahtgeflechtrohr mit einer Umhüllung zusammengesetzt. Das sehr locker geflochtene Geflechtrohr besteht aus Weicheisen und dient einerseits als Stützunterlage zur Formung des Gummimaterials zu einem dünnwandigen Rohr, das keiner mechanischen Beanspruchung ausgesetzt zu werden braucht. Andererseits wird mit der Weicheisenschlauchseele bezweckt, den Belüftungsschlauch für den Einbau beliebig unelastisch deformieren und krümmen zu können.

Der angesprochene Hydraulikschlauch wird im Bauwesen, im Bergbau, in der Landwirtschaft und in der Erdölförderung eingesetzt. Zu seiner Herstellung wird ein an sich schon sehr stabiler und starker eigentlicher Schlauch vorgelegt, den man, um ihm hochbeanspruchbare Eigenschaften zu verleihen, in technisch aufwendiger Weise mit bruchfesten Stahldrähten umflicht; nach der Ummantelung des eigentlichen Schlauches mit dem stählernen Verstärkungsmaterial wird dann die äußere Gummischicht aufgebracht, worauf als letzter Arbeitsgang die Vulkanisation des Schlauches erfolgt. Dieser Schlauch ist zwar hervorragend beanspruchbar, doch ist er schwer und unflexibel.

Ein für die Handbedienung vorgesehener Schlauch, insbesondere ein Saugschlauch auf dem Sektor der Außenund Innenreinigung von Gebäuden und Großfahrzeugen, der Druckdifferenzen zwischen Umgebungs-und Innendruck von 90 kPa (9 m Wassersäule; 0,9 atm) standhalten soll und der Anwendungslängen von typischerweise 20 Metern und darüber aufweisen kann, soll zur optimalen Handhabbarkeit und Leistungsfähigkeit unter anderem folgende Anforderungen erfüllen: Er soll außen glatt und nicht gerippt sein, um gut über Ecken und vorspringende Hindernisse gezogen werden zu können; leicht und zu diesem Zwecke insbesondere dünnwandig sein; gut flexibel sein, sich also gut biegen und wieder strecken lassen; nicht dazu neigen, eine eingenommene Biegung beizubehalten, damit die Arbeitsdistanz des Schlauches und vor allem dessen innerer Strömungswiderstand nicht ungünstig beeinflußt werden; für einen möglichst geringen Strömungswiderstand keine Rippen und Ein-oder Ausbuchtungen der inneren Schlauchwandung aufweisen; und er soll beim Saugbetrieb keine Längenschrumpfung erfahren, die jedenfalls bei den auf dem Großreinigungssektor bekannten Saugschläuchen mit eingebetteter Spirale bei hoher Saugleistung beträchtliche Ausmaße annehmen kann.

Von den bekannten Saugschläuchen erfüllt keiner sämtliche dieser Eigenschaften.

So sind die mit einer Drahtspirale armierten Gummi-oder Weichkunststoffschläuche allgemein recht unflexibel. Bei dickwandiger Bauweise sind sie überdies naturgemäß schwer. Bei dünnwandiger Bauweise, die regelmäßig auch eine stärkere formhaltende Spirale erfordert, neigt die Schlauchhülle dazu, zwischen den Spiralgängen nach innen gesaugt zu werden, und so spiralige Rippen auszubilden. Bei Spiralarmierung mit größerem Windungsabstand oder bei dünnwandiger Bauweise des Schlauches wird im Saugbetrieb also das Wandmaterial nach innen gesaugt und bildet einen in den Schlauchkanal vortretenden, spiralig verlaufenden Wulst aus, der den Strömungswiderstand beachtlich erhöht; gleichzeitig verkürzt sich der Schlauch beträchtlich und versteift sich dabei. Beim Verringern des Unterdrucks längt sich der der Schlauch wieder, was beim übergangslosen Abschalten des Saugbetriebs spontan erfolgt, wobei es zu unkontrollierten, heftigen Seitwärtsbewegungen des Schlauches kommen kann.

Schläuche mit einer konventionellen Geflecht-Schlauchseele sind generell nur für den Druckbetrieb konzipiert und daher für den hochleistungsfähigen Saugbetrieb schlecht geeignet oder, sofern sie gänzlich zusammenfielen, völlig ungeeignet.

Für die aus spiralig aneinandergesetzten Materialstreifen erzeugten, außen gerippten Schläuche treten im Unterdruckbetrieb zwar weniger eine Einwölbung der materialdünneren Wandzonen und eine Schlauchverkürzung auf, jedoch sind diese Schläuche wenig flexibel und eine längerzeitig eingehaltene Biegung, z.B. bei aufgerollter Verwahrung des Schlauches, neigt dazu, beibehalten zu bleiben. Wegen der versteifenden, spiralförmigen Außenrippen läßt sich allgemein auch kein kleiner Krümmungsradius des Schlauches erzielen. Einen strömungsdynamisch besonderen Nachteil zeigen diejenigen Konstruktionen, die einen spiraligen, gelenkigen Außenwulst aufweisen, da dort der Schlauch an seiner Kanalwand eine unter dem Wulst gelegene, spiralförmig umlaufende Einbuchtung trägt. Bei Krümmung des Schlauches kann sich diese Spiralbucht zwar an der Innenkurve gegebenenfalls schließen, erfährt jedoch an der Außenkurve zwangsweise eine besonders breite Erweiterung, so daß in keinem Betriebszustand eine glatte, sondern stets eine unebene und dadurch strömungsungünstige Innenwandung des Schlauches vorliegt.

Gegenüber den oben beschriebenen, in Teilaspekten ausnahmslos mehr oder weniger nachteiligen bekannten Schläuchen bezweckt die Erfindung, Unterdruckschläuche zu schaffen, die außen glatt und nicht gerippt sind; die leicht und zu diesem Zweck dünnwandig sind; die gut flexibel sind und dabei die Tendenz zeigen, sich auszurichten, wenn die Schlauchbiegung -ufgehoben werden soll ; die sich bei hohem Unterdruck nicht verkürzen und nicht versteifen, sondern sich, vorteilhafterweise, eher strecken und dabei ihre Flexibilität oder Biegsamkeit bewahren; die in jedem Betriebszustand gegenüber lokal auf sie von außen einwirkenden Druckkräften sehr widerstandsfähig sind; die sich beim Nachlassen von radialen und longitudinalen Deformationskräften elastisch zurückformen; und die sich im übrigen auch als widerstandsfähige Druckschläuche verwenden lassen.

Gemäß der Erfindung werden diese aufgeführten Eigenschaften in erster Linie durch ein vorgefertigtes, elastisch flexibles nach radialer und/oder longitudinaler Verformung elastisch sich rückformendes, stabiles Geflechtrohr als Festigkeitsträger (Schlauchseele) erreicht.

Für die Schlauchseele geht die Erfindung in erster Linie von einem nahtlosen Matalldrahtgeflechtrohr aus, das einerseits aus einem bruchfesten, steifen und Verformungskräften sich widersetzenden Drahtmaterial gebildet ist und das sich andererseits dadurch auszeichnet, daß bei einer durch Krafteinwirkung auf die Schlauchseele hervorgerufenen Veränderung ihrer Flechtwerkgeometrie die Kreuzungs-oder Bindungspunkte der sich überschneidenden Drähte beibehalten bleiben, d.h., daß sich die überschneidenden Drähte um den Schnittpunkt zwar gegeneinander drehen, nicht jedoch relativ zueinander verschieben. Bei Deformationen der Flechtwerkgeometrie verhält sich das Drahtgeflechtrohr oder die Schlauchseele hinsichtlich der Relativbewegungen der Einzeldrähte an ihren Kreuzungspunkten also nach Art eines Scherengitters.

Nachfolgend wird dieser erste Aspekt der Erfindung näher erläutert.

Das Drahtgeflechtrohr (Schlauchseele) ist aus einer gleichen Anzahl links-und rechtgängig verlaufender Drähte geflochten, die - schraubenlinienförmig der Rohrkontur entlanglaufen, und die von sich kreuzenden parallelen Drahtpaaren gebildeten Maschen weisen die Form eines Rhombus oder eines Quadrates auf. Da das Drahtmaterial zwar steif aber elastisch ist und da wegen des alternierenden Über-und Unterlaufens anderer Drähte jeder Einzeldraht in eine Wellenform gezwungen ist, die sich nicht einebnen kann, liegen die Drähte an ihren Kreuzungspunkten derartig fest gegeneinandergepreßt, daß sie sich bei Einwirkung von Zug-und Druckkräften auf das Rohrgeflecht gegeneinander nicht verschieben, sondern nur an den Kreuzungspunkten gegeneinander drehen können (Scherengittereffekt). Diese Bindungsfixierung bringt eine Reihe von Vorteilen.

Zur besseren Veranschaulichung dessen diene die Fig. 1, in der ein Abschnitt eines Drahtgeflechtrohres als vorgefertigte Schlauchseele gemäß der Erfindung in perspektivischer Ansicht gezeigt ist.

Das gezeigte Rohr 1 ist als nahtloses Drahtgeflecht ausgeführt, im gezeichneten Falle zufälligerweise aus sechzehn paarweise angeordneten rechtsgängigen und sechzehn paarweise angeordneten lingsgängigen Drähten. Ein einzelner Draht 2 ist durch besonders starke Strichführung herausgehoben, wobei dessen durchgehende Linie die dem Betrachter zugekehrte Seite des Rohres oder der Schlauchseele 1 und dessen gestrichelte Linie die dem Betrachter abgekehrte Seite betrifft. Nach diesem Schema sind auch die übrigen Drähte dargestellt. So ist mit 3 ein Draht in der vorderen und mit 4 ein Draht in der hinteren Rohrhälfte bezeichnet. Die Form der Maschen 5 ist hier ein Rhombus, der sich in Umfangsrichtung des Rohres 1 länger als in dessen Längsrichtung erstreckt (flache Maschen). Die Bindung des gezeigten Flechtwerkes ist zweiflechtig, worunter verstanden wird, daß ein und derselbe Draht alternierend die jeweils nächsten zwei sich mit ihm kreuzenden Drähte entweder über-oder unterläuft, was in der Figur teilweise dadurch symbolisiert ist, daß obenliegende Drähte stark und untenliegende Drähte - schwach ausgezogen gezeichnet sind. Bei einer einflechtigen Bindung würde ein Draht den nächsten sich mit ihm kreuzenden z.B. überlaufen und den übernächsten unterlaufen usw.. Die Erfindung ist jedoch nicht auf die gezeigte Zweibindigkeit festgelegt. Grundsätzlich lassen sich mit der ein-, mit der zwei-oder auch mit einer höherflechtigen Bindung die Vorteile der Schlauchseele gemäß der Erfindung verwirklichen.

Wegen des steifen und gleichzeitig elastischen, bruchfesten Drahtmaterials ist die Schlauchseele von vorneherein mechanisch sehr widerstandsfähig und stabil. Wird sie durch Längs-oder Querstauchung oder -zug deformiert, nimmt sie nach dem Aufheben der Deformierungskräfte auf Grund der Scherengittereigenschaft ihres Flechtwerkes wieder ihre Ausgangsgestalt an. Dabei sind folgende Deformierungskräfte miteinander gekoppelt: Eine Streckung/Stauchung des Geflechtrohres wirkt sich - gegenläufig - in einer Kontraktion/Ausweitung ihres Querschnitts aus, und eine Kontraktion/Ausweitung ihres Querschnitts führt umgekehrt zu einer Verlängerung/Verkürzung des Geflechtrohres. Für den weiter unten beschriebenen fertigen Schlauch mit Schlauchseele wird sich das dann dahingehend auswirken, daß bei starkem Unterdruck im Schlauch, der eine Kontraktion des Schlauchquerschnitts und damit der Schlauchseele fördert, die Schlauchseele und damit der Schlauch dazu neigen, sich zu strecken anstatt sich zu verkürzen, womit eine den Arbeitszweck nur fördernde Wirkung einträte, die sämtlichen bekannten Saugschläuchen, die sich beim Saugbetrieb teils sogar beträchtlich verkürzen, nicht zu eigen ist.

Der Deformierungswiderstand und die Rückstellkräfte der Schlauchseele sind besonders hoch, wenn das Drahtmaterial hochfest und -elastisch ist, z.B. Federstahlqualität aufweist. In diesem Falle neigt die Schlauchseele beim Versuch, sie flachzudrücken, was einen ohnehin schon recht hohen Kraftaufwand verlangte, auch nicht besonders dazu, daß die Drähte im Gebiet ihrer stärksten Krümmung geknickt werden, da der Draht nicht nur in einer Biegung, sondern in hohem Maße auch in einer Torsionsbewegung dem Belastungsangriff nachgiebt. Zur Erzielung dieses Verhaltens ist es günstig, wenn die Steigung bzw. Ganghöhe der geflochtenen Drähte vergleichsweise stark bzw. lang ist. So hat sich für eine Federstahl-Schlauchseele von 55 mm lichter Weite aus Drähten von 0,6 bis 1 mm Durchmesser und mit einer Drahtzahl von 36 eine Ganghöhe von 70 bis 150 mm als besonders günstig herausgestellt. Es sei angemerkt, daß sich die für eine radiale lokale Belastbarkeit von außen optimale Steigung oder Ganghöhe der Drähte mit dem Querschnitt der Schlauchseele in dem Sinne ändert, daß mit steigendem Geflechtrohrquerschnitt auch die Steigung oder Ganghöhe zunehmen muß.

Wie oben bereits erläutert, ist es für die Rückformeigenschaften der Schlauchseele nach einer Deformation maßgeblich, daß die Bindungspunkte der sich kreuzenden Drähte aufrechterhalten bleiben und rein als Drehpunkte wirken. Denn die Drähte sollen keinesfalls aneinander entlang gleiten können, da ein Verrutschen der Drähte gegeneinander die Einstellung von gegenüber den ursprünglichen Längen-und Querschnittsabmessungen der Schlauchseele abweichenden Abmessungen nach Aufhebung der Deformationskräfte bedingen könnte oder müßte. Nun erfüllt die Schlauchseele gemäß der Erfindung als ein Geflecht aus steifem und elastischem Draht die gewünschte Scherengittereigenschaft bereits ausreichend gut, doch läßt sich der gegenseitige Gleitwiderstand der Drähte noch weiter erhöhen, wenn man ihre Oberfläche rauh, beispielsweise geriffelt, gestaltet. Eine rauhe Drahtoberfläche bewirkt den zusätzlichen Vorteil einer besseren Verbindung der Schlauchseele mit dem Schlauchmaterial.

Für die hohe Stabilität und die Reversibilität der Deformierung einer Schlauchseele gemäß der Erfindung spricht folgender ausgeführter Versuch: Ein Drahtgeflechtrohr war aus zweimal achtzehn Drähten von im Durchmesser 0,9 mm starkem geriffeltem Federstahl zweiflechtig (vgl. Fig. 1) hergestellt wobei die Ganghöhe A-B (s. Fig. 1) etwa 8 cm und der Rohrdurchmesser etwa 5,5 cm betrugen. Zur Belastung stellte sich eine Person von 85 kg mit einem Fuß senkrecht zur Rohrachse auf den Umfang des Geflechtrohres, wobei dieses um nur etwa 2 cm niedergedrückt wurde. Nach dem Absteigen war das Rohr wieder rund und hatte den ursprünglichen Durchmesser. Selbst als das Rohr durch wesentlich höhere Belastungen mehrmals stark verflacht wurde - wobei es sich ersichtlich in die Länge streckte - nahm es anschließend die ursprünglichen Abmessungen wieder ein. Im übrigen sei erwähnt, daß eine derartige Schlauchseele auch verhältnismäßig leicht ist. So hatte die vorstehend beschriebene Schlauchseele aus Federstahl ein Gewicht von nur etwa 380 g/m.

Mit Gewichts-und Festigkeitsvorteilen läßt sich statt Federstahldraht beispielsweise ein Draht aus einer hochfesten Titanlegierung verwenden, wobei sich gegenüber Federstahl für gleiche Festigkeiten Gewichtsreduzierungen für die Schlauchseele von 30 % oder mehr ermöglichen. Hierfür kommen beispielsweise Ti-Al-V-und Ti-Ni-Legierungen in Betracht. Titan ist gegenüber Stahl jedoch sehr teuer. Dieser Kostennachteil zugunsten eines geringeren Schlauchgewichts läßt sich mittelbar allerdings durch eine Wiederverwendung der Titandrahtschlauchseele kompensieren. Ist nämlich ein Schlauch mit Titanschlauchseele verbraucht, läßt sich seine organische Mantelschicht thermisch zerstören und so die Schlauchseele zur Verwendung für einen neuen Schlauch wiedergewinnen. Es sei darauf hingewiesen, daß sich bei keinem der nach den bekannten Verfahren hergestellten höchstbeanspruchbaren Schläuchen mit Metalldrahtschlauchseele einer derartige Recycling-Möglichkeit böte, die nicht womöglich daran - scheiterte, daß die Schlauchseele nicht zu isolieren wäre, sondern daran, daß es nach den konventionellen Schlauchherstellungsverfahren unbekannt ist, qualitativ hochwertige Schläuche mit Schlauchseele aus fertig vorbereiteten Drahtgeflechtrohren zu fertigen.

Soweit die Erfindung hinsichtlich der Schlauchseele bislang für Metalldrahtgeflechte beschrieben worden ist, sind ihre Grenzen damit nicht erreicht, da Kunststoffe bekannt sind, die hinsichtlich Festigkeit, Steifigkeit und Elastizität Metallen nahestehen. Daher bietet es sich im Rahmen der Erfindung grundsätzlich auch an, Schlauchseelen der beschriebenen Art und Wirkung aus Kunststoffsträngen zu flechten; selbst ein Mischgeflecht aus Metall-und Kunststoffsträngen wird Vorteile besitzen.

Nachfolgend werden vorteilhafte Ausgestaltungen von Drahtgeflechten als Schlauchseele gemäß der Erfindung und ein Verfahren zu deren Herstellung beschrieben. Soweit dabei auf fertige Schläuche mit einer Schlauchseele gemäß der Erfindung Bezug genommen wird, sei über die Verfahren zur Herstellung von Schläuchen gemäß der Erfindung auf die Erläuterungen weiter unten verwiesen, wobei das Hüllmaterial für die Schlauchwand ein Gummi-oder Kunststoffmaterial ist.

Im Zusammenhang mit der Eigenschaft und Wirkung der Schlauchseele, wie ein Scherengitter deformiert zu werden, ergibt sich aus mechanischen Überlegungen, daß zur Aufnahme und zum Abfangen von radial zur Schlauchachse hin gerichteter Kräfte, wie sie beim Unterdruckbetrieb und bei mechanischer Belastung des Schlauches von außen auftreten, ein Maschenwerk der Schlauchseele oder des Drahtgeflechtrohres 1, bei dem die Maschen, wie auch in Fig. 1 gezeigt, die Form eines flachliegenden Rhombus 5 aufweisen (flache Masche), sich günstiger verhält als ein Maschenwerk mit quadratischen oder solchen Maschen, die sich in der Rohrachsrichtung länger als in der Rohrumfangsrichtung erstrecken (steile Maschen).

Zur Herstellung eines Drahtgeflechtrohres 1 mit flachen Maschen 5 kann dieses sogleich zu dieser Maschenform geflochten werden. Bei härtbaren Metalldrähten, beispielsweise aus Federstahl oder aus einer Titanlegierung, liegt eine andere Möglichkeit darin, daß man zunächst ein primäres Drahtgeflechtrohr mit quadratischen oder mit steilen, oder auch flachen, Maschen flicht, dieses primäre Drahtgeflechtrohr dann bis zu einer flachen, bzw. flacheren, Maschenform staucht und in gestauchtem Zustand zu einem Drahtgeflechtrohr 1 mit flachen Maschen 5 härtet. Eine dermaßen hergestellte Schlauchseele zeichnet sich durch eine besondere Drahtsteifigkeit, eine hohe Fixierung der Bindungspunkte und eine verstärkte Elastizität des Geflechtrohres aus.

Die hervorragende mechanische Widerstandsfähigkeit, Elastizität und Flexibilität derartiger Drahtgeflechtrohre - zu denen nicht nur die in der beschriebenen Weise gehärteten Geflechte rechnen , sondern auch Geflechte aus ungehärtetem, steifem, elastischem Metalldraht und aus Kunststoffsträngen, beispielsweise aus Polyamiden oder aus Polyvinylidenfluorid (PVDF), desweiteren aus faserverstärkten Kunststoffsträngen, etwa köhle- oder glasfaserverstärktes Polyamid, wobei die Verstärkerfasern als durchgehende Langfasern oder als Fasergewirr in dem Kunststoffmaterial eingebettet sind, ferner Geflechte aus einer Kombination von Metalldrähten mit Kunststoffsträngen - befähigt auch noch besonders dünnwandig ausgeführte Schläuche sowohl für den Einsatz als Vakuumschlauch als auch für die Verwendung als Druckschlauch.

Bei Verwendung als Unterdruckschlauch sind die zum Stand der Technik eingangs beschriebenen Nachteile nicht zu beobachten, insbesondere treten keine ring-bis spiralförmigen Einbuchtungen des Hüllmaterials der Schlauchwand auf, und der Schlauch zeigt nicht die geringste Tendenz, beim Saugbetrieb in der Länge zu - schrumpfen; wenn überhaupt eine Längenänderung auftritt, so geht diese gegenteilig zum Stand der Technik in Richtung einer gelinden Schlauchverlängerung. Die unterschiedlichen Verhaltensweisen von Unterdruckschläuchen nach dem Stand der Technik und von Schläuchen mit Schlauchseele gemäß der Erfindung werden nachfolgend näher erläutert.

Die konventionellen rippenlosen Schläuche mit eingeordneter Drahtspirale kontrahieren sich bei Unterdruck, weil die radial zur Schlauchseele hin gerichteten inneren Unterdruckkräfte die zwischen den Spiralwindungen gelegenen Zonen des Schlauchmantels nach innen saugen, demzufolge sich die Spirale enger zieht und damit den Schlauch verkürzt; zusätzlich wird eine Längsstauchung des Schlauches durch die von den Schlauchenden gegeneinander wirkenden achsparallelen Saug-bzw. Druckkräfte gefördert. Diese beiden für eine Schlauchlängenverkürzung gleichsinnigen Effekte können sich so stark auswirken, daß ein konventioneller Saugschlauch für Hochleistungsreinigungssauger bis herab auf etwa 50 % der Länge seines Ausgangszustandes zusammenschrumpft.

Bei einem Schlauch gemäß der Erfindung liegen die Verhältnisse anders. Wegen des vergleichsweise engen Maschenwerkes der Schlauchseele ist das aufgebrachte Hüllmaterial einerseits daran gehindert nach innen gesaugt zu werden; andererseits führt - wie weiter oben schon erläutert - eine etwaige Querschnittsverkleinerung des Schlauches beim Saugbetrieb zu einer Verlängerung der Schlauchseele und damit des Schlauches, welchem Effekt die von den Schlauchenden gegeneinander wirkenden - schlauchachsparallelen Kräfte jedoch, anders als bei den bekannten Schläuchen, kompensativ entgegenwirken.

Nachfolgend werden nun Verfahren zur Herstellung von Schläuchen mit einer Schlauchseele gemäß der Erfindung beschrieben.

Zur Herstellung eines gebrauchsfähigen Schlauches kann das Drahtgeflechtrohr 1 oder die Schlauchseele mit einem auf dem Gebiete üblichen Gummi-oder Kunststoffmaterial überzogen und dieses dann unter erhöhter Temperatur, beispielsweise im Dampfbad, oder im Salzbad vulkanisiert bzw. gehärtet werden. Als Hüllmaterial kommen dabei Vollgummi, Vollkunststoff, Schaumgummi und Schaumkunststoff in Frage, diese auch in Kombination miteinander.

Wegen der hohen Stabilität der Schlauchseele und wegen deren vergleichsweise engmaschiger Struktur lassen sich sowohl für den Unterdruck-als auch für den Überdruck-Betrieb geeignete Schläuche mit dünner Wandstärke erzielen, wobei die bevorzugte Endhärte des Hüll-oder Mantelmaterials bei 30 bis 80 shore A liegt; im Falle von Schaumgummi kann die Endhärte auch über 80 shore A liegen. Gemäß der Erfindung sind jedenfalls Schläuche von etwa 8 cm lichtem Durchmesser mit Wandstärken bis herab zu 2 bis 4 mm möglich, sofern man für die Schlauchseele ein Metallgewebe einsetzt.

Zur Förderung des spezielleren Verwendungszweckes als Vakuum-oder Druckschlauch, läßt sich der Schlauch mit einer außen bzw. innen an der Schlauchseele anliegenden oder mit einer von der Schlauchseele durch eine Zwischenschicht des Hüllmaterials getrennten, textilen oder metallischen Gewebeeinlage ausrüsten, deren Maschenweite gegenüber der Maschenweite der Schlauchseele vergleichsweise eng ist, so daß selbst bei starkem Saug-bzw. Druckbetrieb ein Durchtreten des Hüllmaterials durch die Schlauchseele absolut verhindert ist. Statt die Maschen der Schlauchseele mit einer Gewebeeinlage abzudecken, bewirkt eine Unterstützung der Maschen durch um die Schlauchseele gewundene Drähte oder Fäden gegebenenfalls eine ebenso wirksame Durchtrittssperre für das Gummi-bzw. Kunststoffmaterial der Schlauchwand. Ferner bewirkt ein Einarbeiten von Drähten oder Fäden konzentrisch um die Schlauchseele, um die Schlauchperipherie oder dazwischen in durchgehender oder abschnittsweiser Packung der Fäden oder Drähte eine radiale Ausdehnungsbegrenzung des unter Druck stehenden Schlauches.

Zur Herstellung von Schläuchen mit einer Schlauchseele gemäß der Erfindung kann man sich der an sich bekannten Technik des Schlauchaufbaues um einen horizontal gehaltenen Dorn bedienen.

Der Dorn wird mit einer Schicht von Hüllmaterial umgeben darüber wird die Schlauchseele gebracht und diese schließlich mit weiterem Hüllmaterial bedeckt. Die Anordnung des Drahtgeflechtrohres über der die spätere innere Hüllschicht des fertigen Schlauches bildenden Materialschicht auf dem Dorn geht allerdings nicht ohne weiteres von statten, da die Schlauchseele einen inneren Durchmesser haben muß, der zumindest gleich dem äußeren Durchmesser der Dornhüllsicht ist oder der gar kleiner ist. Das Aufschieben einer entsprechend bemessenen Schlauchseele über den Dorn wäre so nicht möglich. Zur Abhilfe des Problems vermag die Querschnittsveränderbarkeit des Geflechtrohres bei der Längenveränderung des Geflechtrohres einen weiteren Vorteil zu bieten.

Ein bezüglich des umhüllten Dornes zu enges Geflechtrohr kann nun in seiner gesamten Länge oder abschnittsweise so weit gestaucht werden, bis seine lichte Weite derart zugenommen hat, daß sich das Geflechtrohr ungehindert über den Dorn und dessen Materialbelag führen läßt. Entspannt man nun das Rohr, kontrahiert sich sein Querschnitt, und es legt sich selbsttätig fest an das Untermaterial an oder drückt sich in dieses, tiefstens jedoch bis zum Aufliegen auf dem Dorn, ein. Dabei verbinden sich das Rohr und das plastische Material ausreichend fest miteinander. Nach dem Aufbringen der äußeren plastischen Hüllschicht oder Hüllschichten auf die Schlauchseele wird der so geschaffene Rohschlauch, gegebenenfalls nach Umwicklung mit einer Preßbinde, in konventioneller Weise mitsamt dem Dorn vulkanisiert bzw. gehärtet. Hernach wird der Fertigschlauch, gegebenenfalls unter vorübergehender Stauchung zur Querschnittserweiterung, vom Dorn befreit.

Andererseits kann ein Geflechtrohr mit einer ursprünglichen Weite, die ein Aufziehen auf den Dorn ohne weiteres schon ermöglicht, anschließend gestreckt werden, wobei sich die Schlauchseele im Querschnitt kontrahiert und wie oben beschrieben mit dem plastischen Hüllmaterial auf dem Dorn verbindet. Bei gestreckter Schlauchseele wird dann der Rohschlauch zu Ende gebaut und - wie oben beschrieben - zum Fertigschlauch vulkanisiert. Nach dem Aufheben der noch immer auf die Schlauchseele einwirkenden Zugkraft erweitert sich der Schlauchquerschnitt, so daß der Fertigschlauch besonders leicht von dem Dorn abgezogen werden kann. Dieses zweitgenannte Verfahren könnte dem erstgenannten daher vorzuziehen sein.

In beiden Fällen lassen sich dünnwandige Schläuche herstellen. Für die Hüllschicht um den Dorn, die die spätere Schlauchinnenwandung abgibt, genügen Materialstärken in der Größenordnung der "Wandstärke" des Drahtgeflechtrohres, also in der Größenordnung des Durchmessers deren Drähte, der vorzugsweise unterhalb von 1 mm liegt; auch etwa der halbe Betrag der Drahtstärke kann als Stärke der Dornhüllschicht noch ausreichen. Hierzu sind Hüllschichten des Dornes aus Gummi-oder Kautschukplatten geeignet. Eine Beschränkung der Stärke der Hüllschicht des Dornes zu stärkeren Lagen besteht selbstverständlich nicht.

Für die auf das Drahtgeflechtrohr oder die Schlauchseele außen aufzubringenden Materialschichten gelten entsprechende Maßgaben. Die Schicht kann sehr dünn sein und aus Voll-oder aus Schaummaterial bestehen. Im Falle von Plattenmaterial, z.B. Gummi-oder Kautschukplatten oder - streifen bzw. - bändern, lassen sich diese mittels einer Binde fest an die Schlauchseele anpressen. Im Falle eines schäumbaren Materials als Außenschicht um die Schlauchseele genügen Stärken im Bereich von 0,5 bis 2,5 mm, die nach dem Vulkanisieren auf Stärken im Bereich von 2,5 bis 12,5 mm ausschäumen.

Bei der Erprobung von ersten gemäß der Erfindung hergestellten Schläuchen mit Schlauchseele trat ein zunächst unerklärter Effekt auf, indem an den Schläuchen nach gewisser Benutzungsdauer eine Zunahme ihrer Flexibilität (Biegsamkeit) zu beobachten war. Schließlich wurde erkannt, daß die Flexibilität der Schläuche nicht nur von der Flexibilität der Schlauchseele einerseits und der Elastizität des Mantelmaterials andererseits abhängt, sondern auch davon, inwieweit das Hüllmaterial die Formänderungsleichtigkeit der sich - scherengitterartig formändernden Maschen der Schlauchseele unmittelbar behindert. Damit ist folgendes gemeint. Jede von (acht) weiteren Maschen umgebene Masche 5 besitzt vier Kreuzungspunkte, an denen sie sich bei Formänderung wie sechzehn Scheren verhält. Eine Schere läuft leichter, wenn sich kein Material zwischen ihren Schneiden befindet, andernfalls schwerer. Eine Schere trennt Material am leichtesten, je näher das Material am Dreh-oder Kreuzungspunkt der Schneiden steht. Entsprechende Verhältnisse herrschen nun auch an den Kreuzungspunkten der Maschen der Schlauchseele. Sind die Maschen mit Material voll ausgefüllt, setzt dieses den Maschen einen hohen Formänderungswiderstand - selbstverständlich in Abhängigkeit von der Eigenelastizität des Materials - entgegen. Werden die Maschen einer Schlauchseele häufig durch Benutzung des Schlauches in ihrer Form geändert, arbeiten die Drähte der Maschen um ihre Drehpunkte also wie Scherenblätter und zerstören entweder das Gummimaterial in nächster Umgebung um die Drehpunkte oder lösen es jedenfalls im Bereich der Drehpunkte von der Schlauchseele ab, so daß an den Drehpunkten ein reduzierter Formänderungswiderstand des Gummimaterials auf die Schlauchseele einwirkt. Damit wächst dann auch die Flexibilität des Schlauches - und das ausgangs beobachtete Phänomen findet seine einleuchtende Erklärung.

Die gewonnene Erkenntnis läßt sich nun in vorteilhafter Weise auf die Erfindung anwenden, indem man bereits zu Anfang dafür sorgt, daß die Schlauchseele entweder in eine gegebenenfalls nur dünne Schicht weicheren und damit an den Drehpunkten der Maschen der Schlauchseele leichter zerstörbaren Materials eingebettet ist, auf dem sich dann Schichten härteren Materials aufbauen, oder indem man von Anfang an bereits ein nicht kompaktes Material, wie Schaumgummi, einsetzt, oder indem man die Fließfähigkeit des auf die Schlauchseele aufzubringenden Gummi-oder Kunststoffmaterials so einstellt, daß die engsten Bereiche des Winkels um die Drehpunkte der Maschen der Schlauchseele nicht oder nur unvollkommen von dem Material ausgefüllt werden, welches im übrigen die Drähte der Schlauchseele ungehindert einbettet. Diese Verhältnisse lassen sich mit Vollwie mit Schaumgummi bzw. -kunststoffen erzielen. Bei allen ist es besonders vorteilhaft, als Material innerhalb der Maschen ein solches mit möglichst geringer Rückstellelastizität zu verwenden (sogenanntes totes Material).

Es läßt sich erreichen, daß der nahezu nur zweidimensionale Raum innerhalb jeder Masche nur unvollkommen mit dem zunächst ungehärteten plastischen und dann nach Trocknung oder Vulkanisation oder sonst wie verursachter Härtung elastischen Material der Schlauchwand ausgefüllt ist, wobei zur Belegung der Schlauchseele mit dem Hüll-oder Wandmaterial des Schlauches unterschiedliche Techniken, wie das Auflegen von Gummi-oder Kautschukplatten, eine Gießtechnik oder ein Aufschäumen, anwendbar sind.

Den gewünschten Effekt kann man bei der zuvor beschriebenen Methode unter Anwendung eines Dornes für das auf dem Dorn aufzubringende plastische Material, in das sich die Schlauchseele hineindrückt, wenn man ihren Querschnitt sich kontrahieren läßt, ebenso erreichen, wie für das anschließend auf die äußere Fläche der Schlauchseele aufzugebende plastische Material, auch falls Gummiplatten und dergleichen zur Umhüllung der Schlauchseele vorgesehen sind, und diese zweckmäßigerweise mittels Binden auf das Drahtgeflecht aufgepreßt werden.

Bei mehrschichtigem Aufbau der Schlauchwand weist diejenige Schicht, die die Schlauchseele einbettet, beim fertigen Schlauch günstigerweise Härten im Bereich von 30 bis 70 shore A auf und die äußere Schicht bzw. äußeren Schichten Härten im Bereich von 40 bis 80 shore A.

Nach einer weiteren vorteilhaften Ausgestaltung der Erfindung lassen sich mehrschichtige Schlauchwände durch Aufschrumpfen einer äußeren Hüllschicht auf eine innere Schicht herstellen. Hier, aber auch bei anderen Techniken, bietet sich die Möglichkeit, zur allgemeinen Erhöhung der Schlauchflexibilität (Biegbarkeit) die im Querschnitt konzentrischen beiden (oder mehreren) Hüllschichten durch eine Gleitschicht zu trennen, so daß aneinandergrenzende Hüllschichten beim Krümmen des Schlauches gegeneinander verschieblich sind, worunter jedoch die Festigkeit des Schlauches nicht beeinträchtigt wird.

Statt einer Gleitschicht vermag zwischen zwei Hüllschichten auch eine Zwischenschicht als Diffusionssperre für den radialen Gasdurchtritt durch die Schlauchwand vorgesehen sein; gegebenenfalls lassen sich mit der Zwischenschicht beide Funktionen, nämlich eine Gleitvermittlung und eine Diffusionsbarriere, erfüllen.

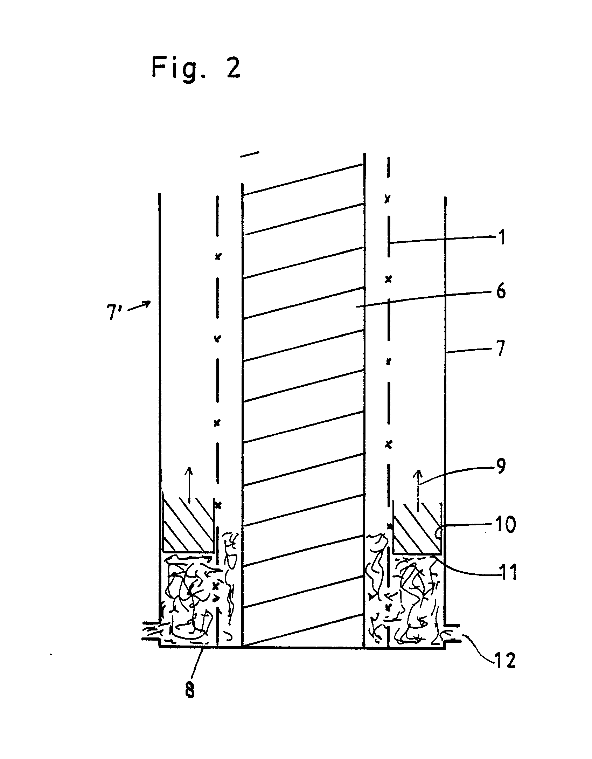

Nach einem besonderen Verfahren gemäß der Erfindung werden die Schläuche mit Schlauchseele aus Integralschaum aufgebaut. Die nähere Erläuterung des technischen Prinzips erfolgt sogleich anhand von Fig. 2.

Ein senkrecht stehender Dorn oder Kern 6 als Zentrum zweier Halbschalen 7 mit halbkreisförmigem Querschnitt, die gemeinsam ein Rohr 7' mit Boden 8 bilden, ist von der Schlauchseele 1 umgeben. In dem Ringraum zwischen den Halbschalen 7 und der Schlauchseele 1 ist ein nach oben (in Richtung der Pfeile 9) verschieblicher Ringkolben 10 mit Boden 11 eingeordnet. Am Boden 8 weisen die Halbschalen 7 einen oder mehrere Einlässe 12 auf.

Der Schlauch wird nun in der Weise hergestellt, daß durch die Einlässe 12 niederviskoses - schäumbares Material, vorzugsweise vom Typ eines Polyurethans (PU) in das aus den Halbschalen 7 gebildete Rohr 7' eingepreßt wird, bis es zunächst unter gleichzeitiger Durchdringung des Maschenwerks der Schlauchseele 1 den freien Raum unterhalb des Bodens 11 des Ringkolbens 10 ausfüllt. Wird der Ringkolben 10 nach oben bewegt, kann weiteres schäumbares Material den Ringraum zwischen dem Rohr 7' und dem Kern 6 ausfüllen. Dem Ringkolben 10 ist die Aufgabe zugedacht, einerseits ein seitliches Nachgeben bzw. Durchbiegen der Schlauchseele 1 beim Befüllvorgang zu verhindern und sozusagen als Distanzhalter gegenüber dem Rohr 7' zu fungieren und andererseits eine gleichmäßig dichte Füllung des Rohres 7' zu begünstigen. Ist die gewünschte Füllhöhe erreicht, läßt man die schäumbare Füllung aus-bzw. zu Ende schäumen und aushärten. Nach dem Entfernen der Halbschalen 7 ist der an sich fertige Schlauch noch von dem Kern 6 zu befreien, um den Durchgangskanal des Schlauches freizulegen.

Bei dem Verfahren ist es, ebenso wie bei der weiter oben zur Schlauchherstellung mittels eines horizontalen Dornes beschriebenen Methode zweckmäßig, die Schlauchseele 1 in gestrecktem Zustand zu verarbeiten, das heißt hier, gestreckt, jedoch mit Abstand zum Kern 6, in das Rohr 7' einzuordnen. Damit sind zwei Vorteile verbunden. Zum einen erweitert sich der Fertigschlauch beim Entspannen seiner Schlauchseele 1, so daß er sich besonders leicht von dem Kern 6 lösen läßt, und zum anderen kann die Mitaufgabe des Ringkolbens 10 und damit der Kolben 10 selbst, entfallen, die Schlauchseele 1 an einem Durchbiegen während der Befüllung des Rohres 7' mit dem schäumbaren Material zu hindern, da die beim Spannen notwendigerweise unten und oben gehaltene und gespannte Schlauchseele dadurch bereits eine ausreichende Lage-und Formstabilität aufweist. Doch läßt sich auch bei ungespannter Schlauchseele 1 ohne einen Ringkolben 10 arbeiten.

Sämtliche dieser Verfahrensvarianten ermöglichen ohne weiteres, Schläuche herzustellen, deren Schlauchseele beliebige konzentrische Positionen zwischen der inneren und der äußeren Schlauchwandung einnimmt, und je nach der Schaumgradeinstellung der eingesetzten plastischen, schäumbaren Masse Volumenverhältnisse von porenfreiem Material zum Gasraumvolumen des Fertigschlauches zwischen 9 : 1 bis 2 : 8 zu erhalten. Ferner läßt sich bei Integralschäumen die Dichte des Hüllmaterials im Bereich der Schlauchaußenwandungen höher als in der Schlauchwandmitte einstellen, so daß die Schlauchseele trotz hoher shore-Härten der Randzonen des Schlauchmantels von Material geringerer Dichte ( höheren Schaumgrades) umgeben ist, wodurch eine punktuelle Materialzerstörung oder -ablösung im Bereich ihrer Drahtkreuzungs-oder Bindungspunkte zugunsten einer besseren Scherengitterbeweglichkeit der Schlauchseele und damit höheren Flexibilität des Schlauches gefördert wird.

Nachfolgend wird ein näheres Beispiel zu einem Schlauch gemäß der Erfindung gegeben.

Zur Herstellung der Schlauchseele wurde ein Drahtgeflechtrohr in zweiflechtiger Bindung aus 2 × 18 Stahldrähten der Röslau-Sorte II (DIN 17 223, Blatt 1. II (D) 1.1211 HV 800) einer Drahtstärke von 0,8 mm geflochten. Dieses Drahtgeflechtrohr wurde in gestauchtem Zustand gehärtet. Die so erhaltene Schlauchseele hatte einen lichten Durchmesser von größer als 55 mm; die Ganghöhe der Drähte (vgl. Fig. 1, Abstand A - B) betrug 140 mm.

Zur Herstellung des Schlauches wurde ein horizontaler Dorn mit einer Vollgummischicht von 0,8 mm Stärke belegt, deren Fertighärte 50 shore A betrug. Die Schlauchseele wurde über den Dorn gebracht und ausgezogen, bis sie fest an dem beschichteten Dorn anlag; ihr lichter Durchmesser betrug jetzt etwa 55 mm. Dann wurde, bei gestreckt gehaltener Schlauchseele, eine 1,4 mm starke Schicht einer schäumbaren Gummimasse auf die Schlauchseele aufgebracht, diese mit einer Anpreßbinde umwickelt und die gesamte Anordnung unter Dampf vulkanisiert.

Der Fertigschlauch wurde dann nach Entspannen der Schlauchseele vom Dorn genommen und erhielt noch eine dichte Umflechtung mit einem Polyethylenband von etwa 0,15 mm Bandstärke als Oberflächenschutz.

Der so erhaltene Schlauch wies einen Innendurchmesser von etwa 57 mm und eine Wandstärke von etwa 3 mm auf.Er konnte ohne weiteres mit einem Unterdruck von 0,8 bar unter dem Atmosphärendruck belastet werden, wobei keine Längenveränderung des Schlauches zu beobachten war.

Der Schlauch hatte ein hervorragend geringes spezifisches Gewicht von etwa 805 g/m und war extrem flexibel. Wurde ein 2 m langes Schlauchstück in der Mitte unterstützt, hingen die Schlauchenden nahezu senkrecht nach unten, wobei ihr Abstand voneinander etwa 70 cm betrug; ein Schlauchstück von 150 cm konnte zu einer beim Ablegen beständigen Brezelform verknotet werden; beim starken Biegen ließen sich Krümmungsradien des inneren Bogens von 3 cm und darunter erreichen, ohne daß der Schlauch irgendwelche Falten ausbildete, sein Querschnitt wurde dabei nur leicht oval. Ebenfalls nur eine leichte Ovalform nahm der Schlauch an, wenn sich eine Person von 85 kg auf ihn stellte; beim kräftigen Wippen federte er. Nach Aufheben der Deformationskräfte nahm der Schlauch seine Ausgangsform stets wieder an.

Zum Vergleich mit diesem Schlauch gemäß der Erfindung wurde ein konventioneller Schlauch mit während des Schlauchaufbaus aufgewebter Metalldrahtschlauchseele besorgt. Dieser Vergleichsschlauch weist einen Innendurchmesser von etwa 58 mm und eine Wandstärke von etwa 7,5 mm auf und das Metalldrahtgeflecht war in einem Abstand zur Schlauchinnenwandung von Zweidritteln der Schlauchwandstärke in der Schlauchwand eingeordnet. Der Schlauch war mit einem spezifischen Gewicht von 2050 g/m sehr - schwer. Dieser Vergleichsschlauch war unflexibel und nahezu starr. So wies ein Schlauchstück von 140 cm Länge, in der Mitte unterstützt, nahezu keine Durchbiegung auf; beim Biegen dieses Schlauchstückes bis zur Berührung der Schlauchenden trat eine Hufeisenform mit einer Vielzahl tiefer Falten in Schlauchumfangsrichtung im Bereich des inneren Bogens auf. Ein derartiger, vom Aufbauprinzip der Schlauchwand her einem Schlauch gemäß der Erfindung am nähesten kommender konventioneller Schlauch mag auf dem industriellen Sektor beispielsweise als Förderschlauch hervorragend geeignet sein auf dem Reinigungssektor wäre er als handbedienter Saugschlauch jedoch in höchstem Maße unbrauchbar.

Wenngleich nun der vorstehend beschriebene konventionelle Schlauch hinsichtlich des Aufbaus der Schlauchwand mit einem Schlauch gemäß der Erfindung insoweit übereinstimmt, als beide Schläuche ein Metalldrahtgewebe als Festigkeitsträger oder Schlauchseele in der Schlauchwand eingearbeitet enthalten, muß festgestellt werden, daß sich derartig leichte und dünne Schläuche, wie sie nach der Erfindung erhalten werden können, wegen der Herstellungsmethode, deren sich der Stand der Technik bedient,trotzdem nicht herstellbar sind. Während gemäß der Erfindung als Festigkeitsträger oder Schlauchseele nämlich ein vorgefertigtes Geflechtrohr Verwendung findet, mit dem es zur Herstellung eines fertigen Schlauches genügt, das Geflecht an seiner Außenseite und insbesondere an seiner Innenseite jeweils mit einer nur sehr dünnen Gummi-und/oder Kunststoffschicht zu belegen, erfordert die bekannte Methode, die Schlauchseele durch Umflechtung eines Schlauchmantelunterbaus erst während des Schlauchaufbaus zu erzeugen, eine erhebliche Materialstärke des zu umflechtenden Unterbaus, da bei der konventionellen Umflechtung auf den Unterbau starke, in den Unterbau einschneidende Kräfte einwirken, die eine dünne Materiallage einschneiden und verletzen müßten. Ein vergleichsweise starker Unterbau der Schlauchwand, und damit ein vergleichsweise hohes Schlauchgewicht sind für Schläuche mit einer Schlauchseele aus einem Metalldrahtgeflecht nach dem Stand der Technik also nicht zu umgehen. Entsprechende Überlegungen gelten ebenso für nichtmetallische Materialien als Festigkeitsträger.

Schließlich sei noch auf einen weiteren Vorteil der Erfindung bei der Herstellung geflechtarmierter Gummi-bzw. Kunststoffschläuche im Zusammenhang mit einer Grundierung der Drähte oder Stränge zur Steigerung der Haftung zwischen dem Schlauchmantelmaterial und dem Festigkeitsträger hingewiesen. Während bei der konventionellen Umfechtungstechnik auf die mit dem Haftvermittler belegten, zu verflechtenden Drähte oder Stränge hohe Abrasionskräfte einwirken, die die Haftvermittlerschicht teilweise zerstören, bewahrt eine erst nach ihrer Fertigstellung mit dem Haftvermittler beschichtete Schlauchseele beim Zusammenbau des Schlauches ihren Haftvermittlerbelag unversehrt.

Folgendes sei noch erläutert. Zur Erhöhung der Biegsamkeit von Saugschläuchen an Haushaltsstaubsaugern ist bekannt, den Saugschlauch im Bereich seines bei der Saugdüse gelegenen Endes sich zur Saugdüse hin konisch verjüngen zu lassen. Zum selben Zweck der Biegsamkeits-oder Flexibilitätserhöhung sind teilweise Konusform einer Schlauchseele 1 gemäß der Erfindung und eines Schlauches gemäß der Erfindung vorteilhaft. Für eine Schlauchseele 1 mit einem allgemeinen Durchmesser von 55 mm, wie für das oben zu Fig. 1 näher angegebene Beispiel, beträgt der engste Durchmesser des konusförmigen Anteils der Schlauchseele 1 günstigerweise etwa 40 mm. Soweit oben also auf Zylinderformen der Schlauchseele 1 bzw. eines Schlauches Bezug genommen worden ist, sind ebenso teilweise zylindrische und teilweise konische Gestaltungen vom Erfindungsgedanken erfaßt.

## Ansprüche

1. Festigkeitsträger für einen Gummi-und/oder Kunststoffschlauch aus einem zu einer Zylinderform geflochtenen Maschenwerk aus Metalldraht und/oder nichtmetallischen Strägen (Schlauchseele), gekennzeichnet als vorgefertigtes, elastisch flexibles, nach radialer und/oder longitudinaler Verformung elastisch sich rückformendes, stabiles Geflechtrohr (1).

2. Schlauchseele nach Anspruch 1, dadurch gekennzeichnet, daß sie sich zu ihrem einen Ende hin konisch verjüngt.

3. Schlauchseele nach Anspruch 1 oder 2, dadurch gekennzeichnet, daß ihre Metalldrähte aus Federstahl oder aus einer Titanlegierung bestehen.

4. Schlauchseele nach Anspruch 1 oder 2, dadurch gekennzeichnet, daß ihre nichtmetallischen Stränge aus einem hochfesten Kunststoff, wie einem Polyamid oder Polyvinylidenfluorid, oder aus einem kohle-oder glasfaserverstärktem solchem Kunststoff mit entweder zentraler Verstärkungsfaser oder Verstärkungsfasergewirr bestehen.

5. Schlauchseele nach einem der Ansprüche 1 bis 4, dadurch gekennzeichnet, daß die an ihr ausgebildeten Maschen (5) die Form eines in Umfangsrichtung der Schlauchseele (1) sich länger als in deren Längsrichtung erstreckenden Rhombus aufweisen (flache Maschen).

6. Verfahren zur Herstellung einer Schlauchseele gemäß Anspruch 5, dadurch gekennzeichnet, daß zunächst ein primäres Drahtgeflechtrohr mit flachen, quadratischen oder solchen Maschen, die sich in Längsrichtung des primären Drahtgeflechtrohres länger als in dessen Umfangsrichtung erstrecken, geflochten und das primäre Drahtgeflechtrohr dann bis zu einer flachen bzw. zu einer flacheren Maschenform gestaucht und in gestauchtem Zustand zur Schlauchseele (1) mit flachen Maschen (3) gehärtet wird.

7. Gummi-und/oder Kunststoffschlauch, hergestellt unter Verwendung einer Schlauchseele (1) gemäß einem der Ansprüche 1 bis 6.

8. Schlauch nach Anspruch 7, gekennzeichnet durch Vollgummi, Vollkunststoff, Schaumgummi, Schaumkunststoff, die Schaumstoffe auch als Integralschäume, in Einzel-oder kombinierter Verwendung als Hüllmaterial.

9 . Schlauch nach Anspruch 7 oder 8, gekennzeichnet durch eine an der Schlauchseele (1) außen oder innen unmittelbar oder mittelbar anliegende Gewebeeinlage mit im Vergleich zur Maschenweite der Schlauchseele (1) vergleichsweise enger Maschenweite und/oder durch eine die Maschenöffnungen (5) der Schlauchseele (1) unterteilende Umwicklung der Schlauchseele (1) mit einem metallischen oder nichtmetallischen Faden.

10. Schlauch nach einem der Ansprüche 7 bis 9, gekennzeichnet durch einen mehrschichtigen konzentrischen Aufbau des Hüllmaterials.

11. Schlauch nach einem der Ansprüche 7 bis 10, dadurch gekennzeichnet, daß die Schlauchseele (1) in ein Hüllmaterial geringer Rückstellelastizität und/oder vergleichsweise guter mechanischer Zerstörbarkeit eingebettet ist.

12. Schlauch nach Anspruch 10 oder 11, dadurch gekennzeichnet, daß von zwei Schichten des Hüllmaterials die äußere auf die innere in der Weise aufgeschrumpft ist, daß beim Biegen des Schlauches beide Schichten gegeneinander verschieblich sind.

13. Verfahren zur Herstellung eines Schlauches mit Schlauchseele (1) gemäß einem der Ansprüche 1 bis 6 unter Anwendung eines horizontal angeordneten Dornes, dadurch gekennzeichnet, daß man
-den Dorn mit einer Schicht oder Lage Hüllmaterial umkleidet,
-ein bezüglich des umkleideten Dornes engeres Geflechtrohr (1) unter Stauchung auf einen zum Durchtritt des Dornes ausreichenden Durchmesser weitet und über den Dorn führt,
-die Stauchung aufhebt,

-die Schlauchseele ein-oder mehrschichtig vollendet und
-konventionell mit dem Dorn zum Schauch härtet.

14. Verfahren zur Herstellung eines Schlauches mit Schlauchseele (1) gemäß einem der Ansprüche 1 bis 6 unter Anwendung eines horizontal angeordneten Dornes, dadurch gekennzeichnet, daß man
-den Dorn mit einer Schicht oder Lage Hüllmaterial umkleidet,
-ein bezüglich des umkleideten Dornes weiteres Geflechtrohr (1) über den Dorn führt und dieses auf eine Querschnittsverkleinerung bis zum Eindringen in das Hüllmaterial streckt,
-unter Aufrechterhaltung der Streckung des Geflechtrohres (1) die Schlauchhülle ein-oder mehrschichtig vollendet und konventionell zum Schlauch härtet und
-die an der Schlauchseele (1) angelegte Zugkraft aufhebt.

15. Verfahren zur Herstellung eines Schlauches mit Schlauchseele (1) gemäß einem der Ansprüche 1 bis 6, dadurch gekennzeichnet, daß der zwischen einem aus zwei Halbschalen (7) gebildeten vertikal stehenden Rohr (7') und einem zentral darin angeordneten Kern (6) eines auf den Innendurchmesser des herzustellenden Schlauches abgestimmten Durchmessers bei im Abstand vom Kern (6) konzentrisch um diesen eingeordneter Schlauchseele (1) usgebildete Hohlraum von unten her mit einem niederviskosen, schäumbaren Material ausgefüllt wird und man dieses zum Hüllmaterial ausreagieren läßt, ehe die Halbschalen (7) entfernt werden.

16. Wiedergewinnung einer Schlauchseele (1) aus Metalldraht aus einem Schlauch gemäß einem der Ansprüche 7 bis 15 durch thermische Zerstörung des organischen Hüllmaterials.

# Fig. 1

# Fig. 2